# EUROPEAN PATENT SPECIFICATION

(11) **EP 0 748 418 B1**
(45) Date of publication and mention of the grant of the patent: **30.07.1997**
(21) Application number: 95911221.0
(22) Date of filing: 17.02.1995
(51) Int. Cl.: F02M 47/04, F02M 21/00

(54) **A FUEL VALVE AND A HIGH PRESSURE GAS ENGINE PROVIDED WITH SUCH A VALVE**
BRENNSTOFFVENTIL UND HOCHDRUCKPHASENMOTOR MIT SOLCHEM VENTIL
INJECTEUR DE CARBURANT, ET MOTEUR A GAZ HAUTE PRESSION MUNI DUDIT INJECTEUR

(30) Priority: 08.03.1994 DK 269/94
(43) Date of publication of application: 18.12.1996
(73) Proprietor: Man B & W Diesel A/S, 2450 Copenhagen SV (DK)
(72) Inventor: Pedersen, Peter, Sunn, DK-4622 Havdrup (DK)
(74) Representative: Indahl, Peter Jensen
(86) International application number: DK9500069
(87) International publication number: WO9524551

(56) References cited:
- DE-A- 1 944 862
- DE-B- 2 742 870
- US-A- 3 416 506
- US-A- 4 865 001
- PATENT ABSTRACTS OF JAPAN, Vol. 9, No. 51, M-361; & JP,A,59 188 068 (HITACHI ZOSEN K.K.), 25 October 1984 (25.10.84)
- PATENT ABSTRACTS OF JAPAN, Vol. 11, No. 364, M-646; & JP,A,62 139 959 (MITSUBISHI HEAVY IND LTD), 23 June 1987 (23.06.87)
- PATENT ABSTRACTS OF JAPAN, Vol. 9, No. 55, M-362; & JP,A,59 190 468 (HITACHI ZOSEN K.K.), 29 October 1984 (29.10.84)

## Description

The invention relates to a fuel valve for injection of gas at a high pressure into a cylinder in an internal combustion engine, particularly a large two-stroke gas engine, wherein a fuel channel connects a high pressure source for gas with a number of nozzle holes, when a valve spindle has been moved in its opening direction away from a valve seat, and wherein the movement of the valve spindle is controlled by control oil.

There are known fuel oil valves which are controlled with control oil. JP-A 59-188068 describes a fuel oil valve for an oil driven diesel engine, where the fuel valve has a valve spindle with a piston surface subjected to the fuel oil pressure acting in the opening direction. A separate piston is positioned on top of the spindle in a hydraulic chamber, which can be pressurized by control oil in order to close the valve. US 3,416,506 describes a fuel oil valve with a valve spindle extending between an upper and a lower hydraulic chamber which both can be pressurized by fuel oil. The valve is opened by relieving the pressure in the upper chamber. These prior art fuel oil valves are operated purely hydraulically, and the oil keeps the valve spindle lubricated.

The known gas valves controlled with control oil are used for engines which are at least partially driven by gas as fuel. Unlike conventional diesel engines, where the opening of the fuel valve is controlled through pressure increases in the fuel generated by the fuel pump, the compressibility of the gas prevents such a valve control, which has necessitated valve control by means of a separate control oil system. In the known gas engines, the controlling pressure variations in the control oil system are generated by a camshaft-driven pump.

In the large two-stroke gas engines, a camshaft-driven oil pump is also used for the supply of pilot oil, viz., oil injected into the cylinder and ignited immediately before the gas injection is initiated, which ensures ignition of the gas. Such a fuel system is known from, for example, Danish patent No. 154 448 or the corresponding Japanese patent No. 1768879. The valve spindle is here kept closed by a powerful compression spring mounted in the housing above the valve spindle. When the fuel valve has to open, the control oil pump generates a strong pressure increase in the control oil so that by acting on a suitable piston area on the valve spindle, the oil exerts a force on the latter, which force acts in the opening direction, overcoming the spring force and displacing the spindle to the open position. The gas injection is interrupted by the compression spring when the pressure of the control oil drops to a low level.

The known fuel gas valves have a sealing oil chamber located in the valve guide around the valve spindle. The sealing oil chamber is continuously supplied with sealing oil at a high pressure to prevent the gaseous fuel from penetrating up through the clearance between the spindle and the guide and further up into the control oil system. The sealing oil thus prevents the valve function from being destroyed by gas occurring in the control oil.

It is desirable that a diesel engine can be converted for gas operation with as few changes as possible. In the known engines, it is therefore a particular disadvantage that the camshaft systems for the diesel engines have to be completely reconstructed to be able to drive both a control oil pump and a pilot oil pump for each fuel valve.

The object of the invention is to simplify the design of the above engines and at the same time render the control oil actuation of the fuel more reliable.

With a view to this object, the fuel valve according to the invention is characterized in that the control oil pressure in a pressure chamber and a compression spring act on the valve spindle in the closing direction, that a piston surface acting in the opening direction of the spindle is located in the fuel channel on the high pressure source side of the valve seat, that the spring force of the compression spring is substantially smaller than the opening force produced by the fuel pressure on said piston surface, and that the fuel valve opens for gas injection, when the pressure chamber is connected with a drain, and interrupts the injection, when the pressure chamber is again supplied with the control oil pressure which moves the valve spindle into abutment against the valve seat.

The compression spring ensures that the valve remains closed if neither control oil pressure nor fuel pressure is applied to it. If a cylinder is provided with several fuel valves, and both the control oil pressure and the fuel pressure are interrupted in case of a single fuel valve, but not the other fuel valves in the cylinder, the compression spring ensures that the disconnected fuel valve is kept in its closed position.

With this design of the fuel valve, the control oil pressure is only used to keep the valve closed, and a removal of this pressure results in a displacement of the valve spindle to the open position as a consequence of the fuel pressure on the piston surface acting in the opening direction. Thus, the control oil may be kept at a constant pressure, as the control is effected in that the control oil inlet of the fuel valve is either subjected to the control oil pressure or is connected to a low pressure source which drains away the control oil pressure. The prior art camshaft-actuated control oil pump can be omitted, and the fuel pump quite usual to diesel engines can be used for the supply of pilot oil. Thus, a diesel engine can be redesigned for gas operation without substantial changes in the camshaft system.

As the control oil pressure is largely constant, it is of no substantial importance to the opening or closing of the valve whether the control oil has gaseous pockets, and this makes the valve function substantially more robust than in the known fuel systems with control oil actuation.

It is also an advantage that the control oil pressure is only drained away for the short period when the valve is open, as fuel leakages to the control oil is counteracted by the fact that the fuel valve is influenced by the control oil pressure throughout almost the full engine cycle. The slight risk of leakage of fuel to the control oil, and the insensitivity of the valve function to such leakages make it possible to do without the previously known, separate sealing oil system, which simplifies the fuel system of the engine and the design of the fuel valve.

Preferably, the spring force of the compression spring is no more than a few times larger than a force which acts in the opening direction and is determined by the maximum pressure of the combustion gases on the end surface of the valve spindle delimited by the valve seat, preferably of the largest diameter of the seat.

If the fuel pressure is interrupted during an injection, the force on the piston surface acting in the opening direction is removed at the same time, and the valve will close, whereupon the compression spring can by itself maintain the closed position, because the spring force is larger than the action of the combustion gases on the valve spindle.

Although for safety reasons the compression spring can be dimensioned with a spring force which is up to a few times, for example two to three times, larger than the opening force of the combustion gases on the valve spindle, the compression spring has substantially smaller dimensions than in the prior art fuel valves of the same size. As the compression spring determines the dimensions of the upper section of the fuel valve, the fuel valve according to the invention may be given advantageously small dimensions, which facilitates the arrangement of the valve in the cylinder cover.

In a particularly simple and therefore frequently preferred embodiment, the piston surface acting in the opening direction is located on the valve spindle between an upper section positioned in a spindle guide and a lower section with a smaller diameter which carries the movable valve seat area, and the control oil pressure acts on an upward surface on the valve spindle, preferably on its upper end. This valve spindle may be manufactured in a simple manner by turning, with a lower spindle section being turned down to a smaller diameter than an upper section, which is machined as a guide surface for insertion in the spindle guide. The control oil pressure can act on the upper end of the valve spindle straight away so that the prior art control oil chamber with pertaining diameter differences and associated sealing surfaces on the spindle and the valve guide, respectively, can be completely avoided.

The control oil pressure may be higher than the fuel pressure, so that the control oil will continuously seep into the clearance between the valve spindle and the spindle guide and keep the mutually moved surfaces well lubricated. If the control oil pressure is lower than the fuel pressure, or merely if full control is desired over any fuel leakages, the spindle guide may suitably have an annular groove open towards the spindle and connected with a drainage channel, and an oil channel in the spindle guide may open out into the area between the groove and the fuel channel. In addition to the fuel, the annular groove will also drain away the control oil which lubricates the upper section of the valve spindle, and therefore the oil channel in the spindle guide renders it possible to supply oil for lubrication of the lower section of the spindle.

The invention further relates to a high pressure gas engine having an injection system which includes a fuel valve of the above type and a control oil source with associated control unit. The injection system of the engine and the fuel valve are functionally carefully adapted to each other and thus fit together approximately like a key and a lock.

According to the invention, the engine is characterized in that the control oil source delivers control oil at a substantially constant predetermined pressure being larger than the fuel pressure in the fuel channel, and that the control unit passes control oil to the fuel valve during the main part of each engine cycle and connects the control oil inlet of the fuel valve with a low pressure source for the period of the engine cycle when the valve must be open. This very simple embodiment of the injection system has been made possible by the above design of the fuel valve, which entails the above advantages.

In consideration of the lubrication of the valve spindle and to counteract gas leakages up through the clearance between the valve spindle and the valve guide, the predetermined control oil pressure is larger than the pressure of the fuel in the fuel channel. During the main part of the engine cycle, the differential pressure across the valve spindle causes the control oil to fill out said clearance. When the control oil is drained away at the opening of the valve, the fuel may penetrate a little into the clearance, but the fuel is pressed out again by the control oil immediately after the valve is closed.

As there is no need for a change in the level of the control oil pressure, but merely for an application or removal thereof, the control unit for the control oil may suitably include an electronically controlled control valve, such as a solenoid valve which may be either open or closed and thus control application or interruption of the control oil to the fuel valve. Preferably, the control valve is a spool valve controlled by a linear motor, as the linear motor is quick-acting and can make a precise continuous setting of the spool valve. A spool valve of this type is described in the Applicant's Danish patent application No. 646/93.

If the control valve is a solenoid valve, the pressure inlet to the control valve is preferably throttled. The throttling restricts the pressure of the control oil upon flow to the fuel valve during its closing so that the spindle does not hit the valve seat with too large an impact, and permits the pressure of the control oil to build up to the full level when the valve is closed.

If the control valve is a spool valve controlled by a linear motor, the control unit may suitably set the control valve to only a partially open flow area for the control oil, before the valve spindle of the fuel valve lands on the valve seat during the closing movement. This has the advantage that the fuel valve is quickly closed, because the valve spindle is actuated by the full control oil pressure at the initiation of the closing movement, while the movement of the valve spindle immediately before abutment against the valve seat may be slowed down according to desire through a suitable reduction of the flow area of the control oil. This very advantageous solution to the conflicting considerations of quick setting of the fuel valve and protection of the valve seat area against overloading has been made possible by the linear motor control, which allows for immediate stepless adjustment of the slide valve.

For safety reasons, the control oil pressure preferably keeps a main fuel switch which is preloaded in the closing direction, in an open position. If the control oil pressure fails, for example owing to pump failure, the opening force on the main switch is also removed so that it is switched to a closed position and interrupts the fuel supply to the fuel valve to avoid an unintended fuel injection. The main switch may be preloaded by a compression spring so that it acts purely mechanically, which is an advantage in electronically controlled systems, which are thus also secured in case of power failures and similar operational failures.

An example of an embodiment of the invention will now be described in further detail below with reference to the very schematic drawing, in which
Fig. 1 is a longitudinal section through a fuel valve according to the invention, and
Fig. 2 is a schematic view of an injection system with the fuel valve of Fig. 1.

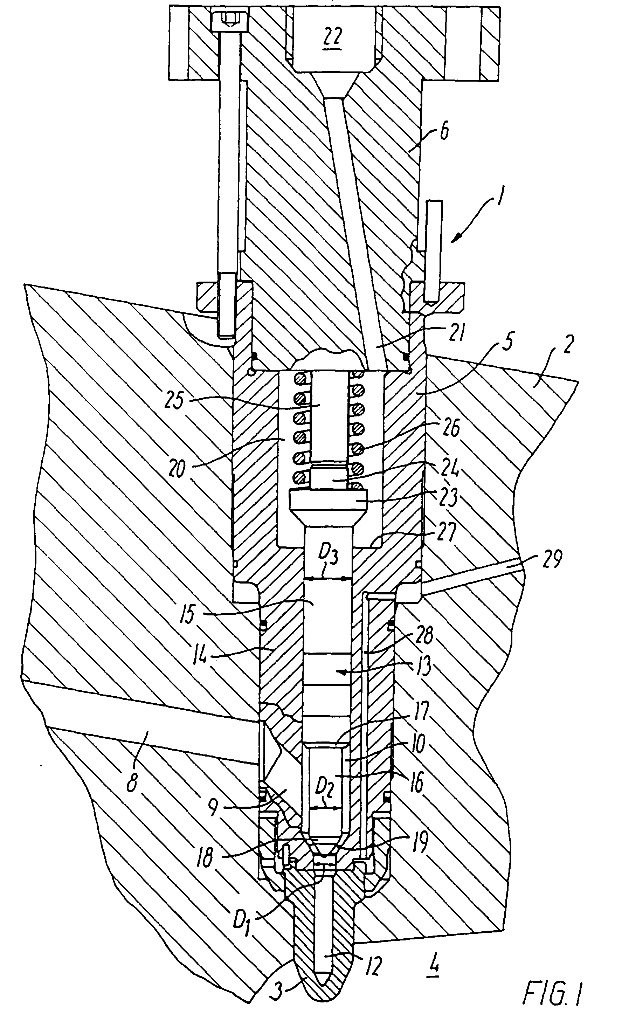

Fig. 1 shows a fuel valve 1, which is inserted in an associated through hole in a cylinder cover 2 so that the tip of a nozzle 3 projects into a combustion chamber 4 of the associated engine cylinder. The fuel valve comprises a valve housing 5 fastened on the cylinder cover by means of a tightening piece 6 and bolts, not shown.

A high pressure source, not shown, for the fuel communicates with a fuel inlet 8 extending in the cover and opening out opposite an oblique channel 9 in the valve housing. The oblique channel leads into a central bore 10 which, via a valve seat 19, may be in flow communication with a bore 12 in the nozzle, from where the fuel may be injected into the combustion chamber through nozzle holes, not shown, when the fuel valve is open.

A valve spindle 13 is mounted so as to be longitudinally displaceable in a valve guide 14 in the valve housing 5. The valve spindle has an upper section 15, which can slide along the bore of the valve guide, and a lower section 16 having a smaller diameter than the upper section, so that the two sections are connected by a downward piston surface 17. At its lower end, the valve spindle has a seat surface 18 which, by abutment against the corresponding valve seat 19 on the valve housing, interrupts the connection between the oblique channel 9 and the bore 12 in the nozzle.

The central bore of the valve guide opens upwards in a pressure chamber 20, which communicates through a flow passage 21 with a control oil connection 22, which is either connected with a pressure source or a drain. The upper section 15 of the valve spindle has a collar 23 located in the pressure chamber 20 and having a spring guide 24 in the shape of a central upright pin. The tightening piece 6 carries a corresponding spring guide 25, which both acts as an upper limitation for the opening movement of the valve spindle and constitutes a guide to a compression spring 26, which is positioned preloaded in between the lower side of the tightening piece 6 and the upper surface of the collar 23.

The compression spring 24 is dimensioned to apply a force acting in the closing direction on the valve spindle, which force is on the one hand substantially smaller than the opening force produced by the pressure of the fuel on the piston surface 17, and on the other hand, by a suitable safety factor, such as from two to three, exceeds the largest opening force which can be produced by the spreading of the combustion pressure in the chamber 4 through the nozzle holes and up into the bore 12, when the fuel valve is inactive and in a closed position. In the closed position, the pressure in the bore 12 at least acts on the valve spindle over an area determined by the diameter D₁ of the bore immediately below the valve seat, that is, the smallest diameter of the valve seat, and if the associated seat surfaces on the spindle and the valve housing are mutually slightly diverging in a downward direction, the pressure in the bore may act on a larger area, but at the most on the area determined by the diameter D₂ of the lower section 16, corresponding to the largest diameter of the valve seat.

If there is only one fuel valve per cylinder, no combustion will occur if the valve is inactive. In this case, the spring 26 may have smaller dimensions, as it only has to overcome the opening force produced by the compression pressure and not the combustion pressure in the cylinder. The ratio between the diameter D₂ of the lower section 16 of the spindle and the diameter D₃ of the upper section 15 is chosen so that the area of the piston surface 17 has a size so that the action of the fuel pressure on the area produces an opening force which is substantially larger, for example 2-4 times larger, than the closing force from the compression spring 26.

Through the passage 21, the control oil may flow into the pressure chamber 20, where it acts on the valve spindle with a force acting in the closing direction and determined by the oil pressure and the effective area of the upper end of the spindle. This area will normally correspond to the cross-sectional area of the valve spindle at the bottom 27 of the pressure chamber. The fuel valve in Fig. 1 is intended for use in an injection system where the control oil pressure is larger than the fuel pressure. This entails the operational advantage that the control oil will penetrate into the clearance between the upper section 15 and the valve guide 14 and keep the valve spindle lubricated, and the manufacturing advantage that the upper section 15 may have a constant diameter D₃ all the way up in the pressure chamber 20. In applications where the control oil pressure is lower than the fuel pressure, the upper section of the valve spindle must have an increased diameter before entry into the pressure chamber 20 so that the control oil acts upon a suitably larger area than the fuel pressure, when the valve is open.

Associated drainage channels 28, 29 in the valve housing 5 and the cylinder cover 2 provide drainage of any fuel leakages at the front end of the valve.

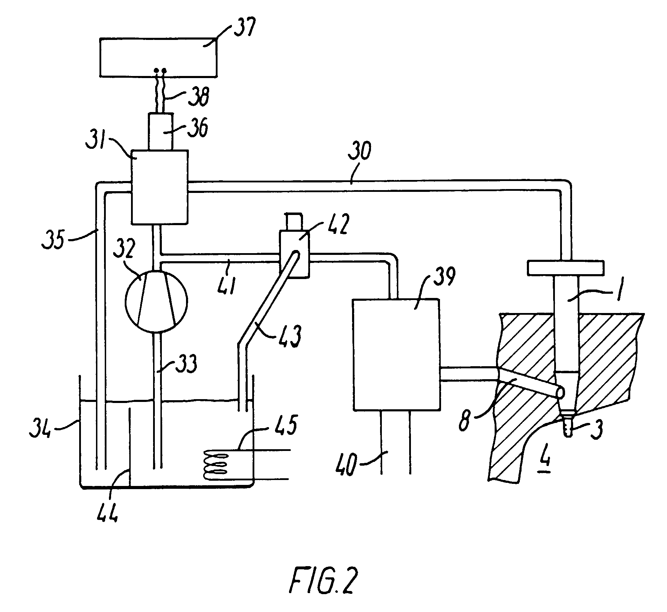

In Fig. 2, the fuel valve 1 is seen used in an injection system for a high pressure gas engine. High pressure is here meant to indicate a pressure larger than the idling compression pressure of the engine, viz., in practice the fuel pressure is normally larger than from 30 to 40 bar, so that it can be injected into the combustion chamber when the piston is near its top dead centre position at the transition between the compression stroke and the expansion stroke. Ignition of the fuel may occur either by means of burning of pilot oil or by means of a heating plug or a similar heat source.

The fuel may be a gas which is gaseous at the injection pressure, or another non-lubricating fuel, such as LPG (liquified petroleum gas) which is liquid at injection. The use of gas as fuel in an otherwise conventional diesel engine yields a substantial environmental advantage, because gas combustion results in a substantially lower emission of environmentally harmful products than oil combustion.

The control oil may, for example, be hydraulic oil or lubricating oil.

The engine may, for example, be a large two-stroke crosshead engine used as a stationary power-generating engine or as a propulsion engine in a ship. The engine may be designed in a medium or large model with outputs from, for example, 2000 kW to 60,000 kW.

The connection 22 of the fuel valve is connected through a pressure pipe 30 and a control valve 31 with a control oil source in the form of a high pressure pump 32, which is fed through a pipe 33 with control oil from a control oil tank 34, where the oil is stored at atmospheric pressure.

The pump 32 may be of a conventional type, such as an axial piston pump with a variable piston displacement, which is controlled so that the delivery pressure of the pump is kept substantially constant regardless of the consumption of control oil. The pressure may, for example, be controlled by means of a valve-adjusted bypass connection between the delivery side and the supply side of the pump. Alternatively, the high pressure pump may be a so-called inclined-disc pump, which automatically adjusts the delivery amount according to consumption and keeps the delivery pressure substantially constant. The pump may have a pressure accumulator on the delivery side to equalize the pulsating consumption of control oil. The high pressure pump may be common to all the cylinders of the engine.

The control valve 31 of each fuel valve is connected to the high pressure side of the pump 32 and to a low pressure source in the shape of a return pipe 35 interconnecting a drainage port in the control valve with the control oil tank. The control valve 31 is adjustable by means of a drive 36, such as a linear motor, on the basis of control signals transmitted from a computer 37 through signal wires 38. The computer 37 may be common to all the cylinders, and it activates the control valve 31 so that the fuel valve is opened at the correct timing in the engine cycle and is kept open for a period adapted to the engine power desired at any time. The fuel valve 1 is kept closed during the main part of an engine cycle by the control valve 31 interconnecting the pressure pipe 30 and the high pressure pump 32, so that the pressure chamber 20 in the valve is pressurized and the valve spindle is pressed into abutment against the valve seat 19.

Through a main valve or switch 39, the fuel inlet 8 is connected with a high pressure source for fuel illustrated by a feed pipe 40. The main switch 39 is spring loaded toward a closed position, but is kept open at normal engine operation by means of the control oil pressure, which is supplied to the main switch through a branch conduit 41 connected to the high pressure side of the pump 32. Thus, the central bore 10 in the valve housing 5 is normally pressurized by the fuel. When the fuel valve 1 has to open, the control valve 31 connects the pressure pipe 30 with the return pipe 35 so that the pressure in the pressure chamber 20 drops to the low pressure in the tank 34, and the pressure of the fuel on the piston surface 17 displaces the valve spindle to the open position shown in Fig. 1. After a suitable gas injection period, for example corresponding to a crankshaft turn of 20°, the control valve 31 is adjusted so that the pressure pipe 30 is reconnected with the high pressure pump, and the control oil pressurizes the pressure chamber 20 so that the valve spindle is displaced to its closed position.

If the control oil pressure fails, the main switch 39 ensures interruption of the connection between the feed pipe 40 and the fuel inlet 8. If, for any other reason it is desired to interrupt the fuel supply quickly, this may be effected by means of switching a stop valve 42 in the branch conduit 41 so that the delivery side of the high pressure pump is connected to the control oil tank 34 through a drainage pipe 43, which results in closure of the main switch 39. The stop valve 42 may be common to all the cylinders of the engine and may be controlled by means of signals from the computer 37.

If the injection system is designed so that the fuel can penetrate into the pressure chamber 20 and from there be passed along with the control oil to the tank 34, this tank may be closed and have a ventilation which is connected through a pipe connection with a suitable drain, where there is no risk of ignition of the fuel. Additionally, the tank 34 may have an oil cooler 45 and a filter 44 separating the return pipe 35 from the feed pipe 33.

As examples of applicable pressures may be mentioned that the control oil pressure may be about 300 bar and the fuel pressure may be about 250 bar.

## Claims

1. A fuel valve (1) for injection of gas at a high pressure into a cylinder in an internal combustion engine, particularly a large two-stroke gas engine, wherein a fuel channel (8, 9, 10, 12) connects a high pressure source for gas with a number of nozzle holes, when a valve spindle (13) has been moved in its opening direction away from a valve seat (19), and wherein the movement of the valve spindle is controlled by control oil, **characterized** in that the control oil pressure in a pressure chamber (20) and a compression spring (26) act on the valve spindle (13) in the closing direction, that a piston surface (17) acting in the opening direction of the spindle is located in the fuel channel (10) on the high pressure source side of the valve seat (19), that the spring force of the compression spring is substantially smaller than the opening force produced by the fuel pressure on said piston surface (17), and that the fuel valve opens for gas injection, when the pressure chamber (20) is connected with a drain, and interrupts the injection, when the pressure chamber is again supplied with the control oil pressure which moves the valve spindle into abutment against the valve seat.

2. A fuel valve according to claim 1, **characterized** in that the spring force is no more than a few times larger than a force which acts in the opening direction and is determined by the maximum pressure of the combustion gases on the end surface of the valve spindle delimited by the valve seat (19), preferably of the largest diameter (D₂) of the seat.

3. A fuel valve according to claim 1 or 2, **characterized** in that the piston surface (17) acting in the opening direction is located on the valve spindle (13) between an upper section (15) positioned in a spindle guide (14) and a lower section (16) with a smaller diameter which carries the movable valve seat area (18), and that the control oil pressure acts on an upward surface on the valve spindle, preferably on its upper end.

4. A fuel valve according to claim 3, **characterized** in that the spindle guide (14) has an annular groove open towards the spindle and connected with a drainage channel, and that an oil channel in the spindle guide opens out into the area between the groove and the fuel channel.

5. A high pressure gas engine with an injection system including a fuel valve (1) according to one of the claims 1-4 and a control oil source with associated control unit, **characterized** in that the control oil source (32) supplies control oil at a substantially constant predetermined pressure being larger than the fuel pressure in the fuel channel, and that the control unit (31, 36, 37) passes control oil to the fuel valve (1) during the main part of each engine cycle and connects the control oil inlet (22) of the fuel valve with a low pressure source (34) for the period of the engine cycle when the valve (1) must be open.

6. A high pressure gas engine according to claim 5, **characterized** in that the control unit for the control oil includes an electronically controlled control valve (31), preferably a spool valve controlled by a linear motor.

7. A high pressure gas engine according to claim 6, **characterized** in that the pressure inlet to the control valve (31) is throttled.

8. A high pressure gas engine according to claim 6, **characterized** in that the control unit sets the control valve (31) to an only partially open flow area for the control oil, before the valve spindle (13) of the fuel valve lands on the valve seat (19) during the closing movement.

9. A high pressure gas engine according to claim 6, **characterized** in that the control oil pressure keeps a main fuel switch (39) which is preloaded in the closing direction, in an open position.

## Patentansprüche

1. Brennstoffventil (1) zum Einspritzen von Gas mit hohem Druck in einen Zylinder in einer Brennkraftmaschine, insbesondere einem Zweitakt-Gasgroßmotor, wobei ein Brennstoffkanal (8,9,10,12) eine Hochdruckquelle für Gas mit einer Anzahl von Düsenöffnungen verbindet, wenn eine Ventilspindel (13) in ihrer Öffnungsrichtung von einem Ventilsitz (19) wegbewegt ist, und wobei die Bewegung der Ventilspindel durch Steueröl gesteuert wird, **dadurch gekennzeichnet,** daß der Steueröldruck in einem Druckraum (20) und eine Druckfeder (26) auf die Ventilspindel (13) in Schließrichtung wirken, daß eine in Öffnungsrichtung der Spindel wirkende Kolbenfläche (17) im Brennstoffkanal (10) auf der Hochdruckquellenseite des Ventilsitzes (19) angeordnet ist, daß die Federkraft der Druckfeder wesentlich kleiner ist als die durch den Brennstoffdruck auf der Kolbenfläche (17) erzeugte Öffnungskraft und daß das Brennstoffventil für eine Gaseinspritzung öffnet, wenn der Druckraum (20) mit einem Ablauf verbunden ist, und die Einspritzung unterbricht, wenn der Druckraum wieder mit dem Steueröldruck versorgt wird, der die Ventilspindel in Anlage an den Ventilsitz bewegt.

2. Brennstoffventil nach Anspruch 1, dadurch gekennzeichnet, daß die Federkraft nicht mehr als wenige Male größer ist als eine Kraft, die in der Öffnungsrichtung wirkt und durch den Maximaldruck der Verbrennungsgase auf der Endfläche der Ventilspindel bestimmt wird, die durch den Ventilsitz (19), vorzugsweise mit dem größten Durchmesser (D₂) des Sitzes, begrenzt ist.

3. Brennstoffventil nach Anspruch 1 oder 2, dadurch gekennzeichnet, daß die in Öffnungsrichtung wirkende Kolbenfläche (17) an der Ventilspindel (13) zwischen einem in einer Spindelführung (14) angeordneten oberen Abschnitt (15) und einem unteren Abschnitt (16) mit einem kleineren Durchmesser angeordnet ist, der die bewegliche Ventilsitzfläche (18) trägt, und daß der Steueröldruck auf eine nach oben gerichtete Fläche an der Ventilspindel, vorzugsweise an ihrem oberen Ende, wirkt.

4. Brennstoffventil nach Anspruch 3, dadurch gekennzeichnet, daß die Spindelführung (14) eine Ringnut aufweist, die zur Spindel hin offen und mit einem Ablaufkanal verbunden ist, und daß ein Ölkanal in der Spindelführung in den Bereich zwischen der Nut und dem Brennstoffkanal ausmündet.

5. Hochdruckgasmotor mit einem Einspritzsystem mit einem Brennstoffventil (1) nach einem der Anspruche 1 bis 4 und einer Steuerölquelle mit zugehöriger Steuereinheit, dadurch gekennzeichnet, daß die Steuerölquelle (32) Steueröl mit einem im wesentlichen konstanten vorbestimmten Druck liefert, der größer als der Brennstoffdruck im Brennstoffkanal ist, und daß die Steuereinheit (31,36,37) Steueröl zum Brennstoffventil (1) während des Hauptteils jedes Motortaktes leitet und den Steueröleinlaß (22) des Brennstoffventils mit einer Niederdruckquelle (34) für die Zeitspanne des Motortaktes verbindet, in der das Ventil (1) offen sein muß.

6. Hochdruckgasmotor nach Anspruch 5, dadurch gekennzeichnet, daß die Steuereinheit für das Steueröl ein elektronisch gesteuertes Steuerventil (31), vorzugsweise ein von einem Linearmotor gesteuertes Trommelventil, aufweist.

7. Hochdruckgasmotor nach Anspruch 6, dadurch gekennzeichnet, daß der Druckeinlaß zum Steuerventil (31) gedrosselt ist.

8. Hochdruckgasmotor nach Anspruch (6), dadurch gekennzeichnet, daß die Steuereinheit das Steuerventil (31) auf einen nur teilweise offenen Strömungsquerschnitt für das Steueröl einstellt, bevor die Ventilspindel (13) des Brennstoffventils auf den Ventilsitz (19) bei der Schließbewegung aufsetzt.

9. Hochdruckgasmotor nach Anspruch 6, dadurch gekennzeichnet, daß der Steueröldruck einen Brennstoffhauptschalter (39), der in Schließrichtung vorbelastet ist, in Offenstellung hält.

## Revendications

1. Soupape à carburant (1) pour injection de gaz à haute pression dans un cylindre d'un moteur à combustion interne, en particulier un moteur à gaz deux-temps de grande taille, où une canalisation de carburant (8, 9, 10, 12) relie une source de gaz haute pression avec un nombre d'orifices d'ajutage, lorsqu'une tige de soupape (13) a été, dans le sens de son ouverture, écartée d'un siège de soupape (19) et où le mouvement de la tige de soupape est commandé par huile de commande, **caractérisée** en ce que la pression d'huile de commande dans une chambre de pression (20) et un ressort de compression (26) agissent sur la tige de soupape (13) dans le sens de la fermeture, en ce qu'une surface de piston (17) agissant dans le sens de l'ouverture de la tige est située dans la canalisation de carburant (10) du coté du siège de soupape (19) orienté vers la source haute pression, en ce que la force du ressort de compression est substantiellement inférieure à la force d'ouverture produite par la pression de carburant sur ladite surface de piston (17), et en ce que la soupape à carburant s'ouvre pour injection de gaz, lorsque la chambre de pression (20) est reliée à un drain, et interrompt l'injection, lorsque la chambre de pression se trouve de nouveau alimentée avec la pression d'huile de commande qui déplace la tige de soupape jusqu'à appui contre le siège de soupape.

2. Soupape à carburant selon la revendication 1, **caractérisée** en ce que la force du ressort n'est pas supérieure à quelques fois une force qui agit dans le sens de l'ouverture et qui est déterminée par la pression maximale des gaz de combustion sur la surface terminale de la tige de piston, délimitée par le siège de soupape (19), de préférence par le plus grand diamètre (D₂) du siège.

3. Soupape à carburant selon les revendications 1 ou 2, **caractérisée** en ce que la surface de piston (17) agissant dans le sens de l'ouverture est située sur la tige de piston (13), entre une section supérieure (15) située dans un guide de tige (14) et une section inférieure (16) présentant un diamètre plus faible et portant la zone mobile (18) de siège de soupape, et en ce que la pression d'huile de commande agit sur une surface, orientée vers le haut, de la tige de soupape, de préférence sa face supérieure.

4. Soupape à carburant selon la revendication 3, **caractérisée** en ce que le guide de tige (14) comporte une gorge annulaire ouverte vers la tige et reliée avec un canal de drainage, et en ce qu'un canal à huile dans le guide de tige s'ouvre dans la zone entre la gorge et la canalisation de carburant.

5. Moteur à gaz haute pression, avec un système d'injection comportant une soupape à carburant (1) selon l'une des revendications 1 à 4, et une source d'huile de commande avec unité de commande associée, **caractérisé** en ce que la source d'huile de commande (32) délivre l'huile de commande sous une pression prédéterminée, essentiellement constante, supérieure à la pression de carburant dans la canalisation de carburant, et en ce que l'unité de commande (31, 36, 37) fournit de l'huile de commande à la soupape à carburant (1) durant la partie principale de chaque cycle du moteur, et relie l'entrée (22) d'huile de commande à la soupape à carburant avec une source basse pression (34) durant la période de temps du cycle du moteur où la soupape (1) doit être ouverte.

6. Moteur à gaz haute pression selon la revendication 5, **caractérisé** en ce que l'unité de commande d'huile de commande comprend une soupape de commande (31) à commande électronique, de préférence une soupape-tiroir commandée par un moteur linéaire.

7. Moteur à gaz haute pression selon la revendication 6, **caractérisé** en ce que l'entrée de pression à la soupape de commande (31) présente un étranglement.

8. Moteur à gaz haute pression selon la revendication 6, **caractérisé** en ce que l'unité de commande ajuste la soupape de commande (31) pour qu'elle n'ouvre que partiellement la surface d'écoulement d'huile de commande, avant que la tige de soupape (13) de la soupape à carburant ne vienne en appui contre le siège de soupape durant le mouvement de fermeture.

9. Moteur à gaz haute pression selon la revendication 6, **caractérisé** en ce que la pression d'huile de commande maintient un interrupteur principal de carburant (39), précontraint dans le sens de la fermeture, en position ouverte.
